# EUROPÄISCHE PATENTSCHRIFT

(11) **EP 3 279 050 B1**
(45) Veröffentlichungstag und Bekanntmachung des Hinweises auf die Patenterteilung: **20.03.2019**
(21) Anmeldenummer: 17182905.4
(22) Anmeldetag: 25.07.2017
(51) Int. Cl.: B60W 30/095, B60W 30/165, B60W 30/16, B60K 31/00, B60W 50/00

(54) **STEUERUNGS-SYSTEM UND STEUERUNGS-VERFAHREN ZUR AUSWAHL UND VERFOLGUNG EINES KRAFTFAHRZEUGS**
CONTROL SYSTEM AND CONTROL METHOD FOR SELECTING AND TRACKING A MOTOR VEHICLE
SYSTÈME DE COMMANDE ET PROCÉDÉ DE COMMANDE DESTINÉ À SÉLECTIONNER ET À SUIVRE UN VÉHICULE AUTOMOBILE

(30) Priorität: 01.08.2016 DE 102016009305
(43) Veröffentlichungstag der Anmeldung: 07.02.2018
(73) Patentinhaber: Lucas Automotive GmbH, 56070 Koblenz (DE)
(72) Erfinder: Altendorfer, Richard, 56070 Koblenz (DE); Oska, Bjoern, 56070 Koblenz (DE)
(74) Vertreter: Schmidt, Steffen J.

(56) Entgegenhaltungen:
- EP-A1- 2 964 503
- EP-A2- 2 072 316
- US-A1- 2014 180 569

## Beschreibung

### Hintergrund der Erfindung

Hier werden ein Steuerungs-System und ein Verfahren zur Auswahl und Verfolgung eines Kraftfahrzeugs offenbart. Dieses System und Verfahren basiert insbesondere auf einer Umfeldsensorik in Kraftfahrzeugen und unterstützt den Fahrer oder ein autonomes Kraftfahrzeug ein am Verkehr teilnehmendes anderes Kraftfahrzeug auszuwählen und zu verfolgen auf Basis verschiedener Bedingungen. Diese Bedingungen erhöhen die Wahrscheinlichkeit, dass das ausgewählte Kraftfahrzeug ein Kraftfahrzeug ist, das für die Verfolgung geeignet ist.

### Stand der Technik

Bei einer Geschwindigkeitsregelung in einem Kraftfahrzeug, die den Abstand zu einem vorausfahrenden Kraftfahrzeug regelt, sowie bei einem Notbremsassistenten in einem Kraftfahrzeug handelt es sich um Fahrerassistenzsysteme, die auf andere Verkehrsteilnehmer reagieren, zum Beispiel Fahrzeuge oder Fußgänger. Hierfür wird der relevanteste Verkehrsteilnehmer ausgewählt um eine entsprechende Aktion auszuführen. Diese sogenannte Streckenauswahl bzw. Zielauswahl geschieht durch Schätzung der Trajektorie des eigenen Kraftfahrzeuges und Auswahl desjenigen Verkehrsteilnehmers, der sich auf dieser Trajektorie befindet. Die Schätzung der Trajektorie basiert generell auf dem Wissen über eine Geschwindigkeit und eine Gierrate des eigenen Kraftfahrzeugs, als auch auf anderen zur Verfügung stehenden Informationen, zum Beispiel Fahrbahnmarkierungen. Dieses Verfahren führt manchmal zu einer schlechten Streckenauswahl bzw. Zielauswahl. Der Nachteil liegt in einem großen Messrauschen und der Annahme, dass die aktuelle Geschwindigkeit und Gierrate für die nächsten Sekunden gleich bleiben wird. Ein solches System wird in EP2072316 A2 beschrieben.

### Zugrundeliegendes Problem

Es ist Aufgabe der vorliegenden Erfindung eine Streckenauswahl bzw. Zielauswahl von Kraftfahrzeugen zu verbessern.

### Vorgeschlagene Lösung

Gemäß einem ersten Aspekt ist ein Steuerungs-System dazu eingerichtet und bestimmt, vorausfahrende Kraftfahrzeuge zu erkennen. Das Steuerungs-System ist wenigstens dazu eingerichtet und bestimmt, ein am Verkehr teilnehmendes anderes Kraftfahrzeug mit dem mindestens einen Umfeldsensor zu erfassen. Das Steuerungs-System ist wenigstens dazu eingerichtet und bestimmt, Positionen des anderen Kraftfahrzeugs für ein vorbestimmtes Zeitintervall zu ermitteln. Das Steuerungs-System ist wenigstens dazu eingerichtet und bestimmt, am Ende des Zeitintervalls zu bestimmen, ob
a) eine aktuelle Position des eigenen Kraftfahrzeugs vor wenigstens einer der ermittelten Positionen des anderen Kraftfahrzeugs liegt;
b) ein lateraler Abstand zwischen einer jeweils nächsten Position der ermittelten Positionen des anderen Kraftfahrzeugs vor und hinter der aktuellen Position des eigenen Kraftfahrzeugs einen vorbestimmten Wert nicht überschreitet; und
c) eine Anzahl der ermittelten Positionen des anderen Kraftfahrzeugs, die sich vor der aktuellen Position des eigenen Kraftfahrzeugs befinden, eine vorbestimmte Mindestanzahl überschreitet.

Das Steuerungs-System ist wenigstens dazu eingerichtet und bestimmt, aus den ermittelten Positionen des anderen Kraftfahrzeugs eine Trajektorie zu estimieren, wenn bestimmt wurde, dass a), b) und c) erfüllt sind. Das Steuerungs-System ist wenigstens dazu eingerichtet und bestimmt, das andere Kraftfahrzeug auszuwählen, um diesem zu folgen, basierend auf einem Abweichungsmaß zwischen der estimierten Trajektorie des anderen Kraftfahrzeugs und einer Trajektorie des eigenen Kraftfahrzeugs.

"Estimieren" ist hier eine Bestimmung oder eine Näherung der zu estimierenden Trajektorie des anderen Kraftfahrzeugs durch eine Interpolation der ermittelten Positionen des anderen Kraftfahrzeugs oder durch eine Extrapolation, um über die ermittelten Positionen des anderen Kraftfahrzeugs hinausgehende Positionen des anderen Kraftfahrzeugs zu erhalten.

Die hier vorgestellte Lösung bietet den Vorteil, dass die estimierte Trajektorie des anderen Kraftfahrzeugs auf erfassten Daten beruht. Dadurch sind die Umfelddaten durch weniger Rauschen belastet. Ferner kann für das vorbestimmte Zeitintervall ein sogenannter "Headway", d.h. in Vorausschau eine Zeit, zum Beispiel in einer Größenordnung von 7 Sekunden, gewählt werden, wodurch sichergestellt wird, dass sich die estimierte Trajektorie des anderen Kraftfahrzeugs und die Trajektorie des eigenen Kraftfahrzeugs treffen können. Trajektorien von anderen Kraftfahrzeugen können ferner für die Verwendung einer Verkehrssituation dienen.

Die aktuelle Position kann eine Position sein zu einem Zeitpunkt nach oder am Ende des vorbestimmten Zeitintervalls.

Der laterale Abstand kann als Abstand senkrecht zu einer Verlaufsrichtung einer Fahrbahn verstanden werden. Ein lateraler Abstand zwischen zwei Punkten kann somit ein Abstand zwischen den beiden Punkten senkrecht zu einer Fahrbahnverlaufsrichtung sein, bzw. zu der Fahrrichtung des eigenen Kraftfahrzeugs.

### Weitere Ausgestaltungen und vorteilhafte Weiterbildungen

Das Abweichungsmaß zwischen der estimierten Trajektorie des anderen Kraftfahrzeugs und der Trajektorie des eigenen Kraftfahrzeugs kann einen vorbestimmten Schwellenwert unterschreiten.

Der vorbestimmte Schwellenwert kann durch einen Abstand, einer Krümmung und/oder einen Verlauf vorbestimmt sein. Der vorbestimmte Schwellenwert kann durch einen maximalen Wert für den Abstand, dem Krümmungsunterschied oder den Verlaufsunterschied festgelegt sein. Das Abweichungsmaß kann bestimmt werden durch einen lateralen Abstand zwischen den Trajektorien, ausgehend von einer der beiden Trajektorien.

Das Abweichungsmaß für eine Mindestlänge der Trajektorie des eigenen Kraftfahrzeugs kann unterschritten werden.

Die Mindestlänge kann eine Länge angeben, für die das Abweichungsmaß den vorbestimmten Schwellenwert unterschreitet. Die Mindestlänge kann eine Länge oder Entfernung zwischen zwei Punkten sein, innerhalb der oder zwischen denen das Abweichungsmaß der estimierten Trajektorie zu der eigenen Trajektorie den vorbestimmten Schwellenwert unterschreitet.

Die Mindestlänge kann über einem vorbestimmten Schwellenwert liegen basierend auf einem aktuellen Abstand zwischen dem eigenen und dem anderen Kraftfahrzeug. Der aktuelle Abstand zwischen dem eigenen und dem anderen Kraftfahrzeug kann kleiner als die Mindestlänge sein.

Das Steuerungs-System kann ferner dazu eingerichtet und bestimmt sein, das teilnehmende andere Kraftfahrzeug auszuwählen, um diesem zu folgen, wenn
a) ein aktueller Abstand zwischen dem eigenen und dem anderen Kraftfahrzeug einen vorbestimmten Schwellenwert unterschreitet;
b) der Fehler der estimierten Trajektorie einen vorbestimmten Schwellenwert unterschreitet;
c) die Krümmung der estimierten Trajektorie einen vorbestimmten Schwellenwert unterschreitet; und/oder
d) die relative Geschwindigkeit zwischen dem anderen Kraftfahrzeug und dem eigenen Kraftfahrzeug einen vorbestimmten Schwellenwert unterschreitet.

Das Steuerungs-System kann ferner Fahrbahnbegrenzungen und/oder Fahrbahnmarkierungen erkennen. Der mindestens eine Umfeldsensor kann dazu eingerichtet sein, einer elektronischen Steuerung des Steuerungs-Systems die den Bereich vor dem Kraftfahrzeug wiedergebende Umfelddaten bereitzustellen. Das Steuerungs-System kann wenigstens dazu eingerichtet und bestimmt sein, Fahrbahnbegrenzungen und/oder Fahrbahnmarkierungen mit dem mindestens einen Umfeldsensor zu erfassen. Das Steuerungs-System kann wenigstens dazu eingerichtet und bestimmt sein, aus den erfassten Fahrbahnbegrenzungen und/oder Fahrbahnmarkierungen jeweils eine Trajektorie zu ermitteln. Das Steuerungs-System kann wenigstens dazu eingerichtet und bestimmt sein, Paare aus den ermittelten Trajektorien zu bilden, wobei ein Paar jeweils zwei Trajektorien umfassen kann. Das Steuerungs-System kann wenigstens dazu eingerichtet und bestimmt sein, für jedes Paar erster und zweiter Trajektorien in vorbestimmten Abständen Abtastpunkte zu ermitteln. Das Steuerungs-System kann wenigstens dazu eingerichtet und bestimmt sein, quer zu einer Verlaufsrichtung der ersten Trajektorie Abstände der ermittelten Abtastpunkte zu der zweiten Trajektorie zu bestimmen, und eine Länge eines Abschnittes entlang der Verlaufsrichtung der ersten Trajektorie zu berechnen, bei der die bestimmten Abstände innerhalb eines vorbestimmten Wertebereichs liegen, und/oder quer zu einer Verlaufsrichtung der zweiten Trajektorie Abstände der ermittelten Abtastpunkte zu der ersten Trajektorie zu bestimmen, und eine Länge eines Abschnitts entlang der Verlaufsrichtung der zweiten Trajektorie zu berechnen, bei der die bestimmten Abstände innerhalb des vorbestimmten Wertebereichs liegen. Das Steuerungs-System kann wenigstens dazu eingerichtet und bestimmt sein, eine Menge von Paaren von Trajektorien basierend auf einem Kriterium für die Paarbildung auszuwählen, um basierend auf dieser Menge mindestens eine Fahrbahn und/oder mindestens eine Trajektorie für das Kraftfahrzeug zu bestimmen.

Der Vorteil dieser vorgeschlagenen Lösung liegt in der Fähigkeit, längere Aufnahmen von Fahrbahnbegrenzungen und/oder Fahrbahnmarkierungen zu machen anstatt lediglich eine aktuelle Position eines Verkehrsteilnehmers oder von Pfadhinweisen aufzunehmen. Die Trajektorien als eindimensionale Linienstrukturen haben eine intuitive Bedeutung und deren Ähnlichkeit bzw. Parallelität kann auf mathematischem Wege berechnet werden. Aus den einzelnen Trajektorien kann zusätzlich eine Basis geschaffen werden um situationsbedingte Modelle berechnen zu können, auf die später in ähnlichen Fahrsituationen in Folge von Trainingsdaten zurückgegriffen werden kann.

Der vorbestimmte Wertebereich kann so gewählt werden, dass die Abstände zwischen den zwei Trajektorien eines Paares im Wesentlichen parallel verlaufen. Es ist auch denkbar, dass ein größerer Wertebereich festgelegt wird.

Das Kriterium für die Paarbildung kann eine Länge, ein Abstand, eine Krümmung und/oder ein Verlauf der Trajektorien sein.

Die Abschnitte der ersten und zweiten Trajektorie können durch ein Sichtfeld des mindestens einen Umfeldsensors vorgegeben sein.

Das Kriterium für die Paarbildung können die zwei berechneten Längen der Abschnitte der ersten und der zweiten Trajektorie jedes Paares sein.

Das Kriterium für die Paarbildung kann ein Maximum sein, das aus den zwei berechneten Längen der Abschnitte der ersten und der zweiten Trajektorie jedes Paares ermittelt wird.

Das Kriterium für die Paarbildung kann ein Mittelwert oder eine Standardabweichung sein, der/die aus den zwei Längen der Abschnitte der ersten und der zweiten Trajektorie jedes Paares ermittelt wird.

Der Mittelwert und/oder die Standardabweichung jedes Paares kann herangezogen werden, um basierend auf dem größten Mittelwert bzw. der kleinsten Standardabweichung das dazugehörige Paar auszuwählen.

Für die Paarbildung können ausschließlich Trajektorien verwendet werden, die eine vorbestimmte Mindestlänge aufweisen.

Das Steuerungs-System kann wenigstens dazu eingerichtet und bestimmt sein, am Verkehr teilnehmende andere Kraftfahrzeuge vor dem eigenen Kraftfahrzeug mit dem mindestens einen Umfeldsensor zu erfassen. Das Steuerungs-System kann wenigstens dazu eingerichtet und bestimmt sein, eine jeweilige Position der anderen Kraftfahrzeuge mit dem mindestens einen Umfeldsensor zu bestimmen. Das Steuerungs-System kann wenigstens dazu eingerichtet und bestimmt sein, aus einer aktuellen Geschwindigkeit und einer aktuellen Gierrate des eigenen Kraftfahrzeugs eine Trajektorie des eigenen Kraftfahrzeugs zu bestimmen. Das Steuerungs-System kann wenigstens dazu eingerichtet und bestimmt sein, ein einziges Kraftfahrzeug aus den anderen Kraftfahrzeugen auszuwählen, das den kürzesten Abstand zu der Trajektorie aufweist, um diesem einzigen Kraftfahrzeug mit dem eigenen Kraftfahrzeug zu folgen.

Der Vorteil dieser Lösung liegt in der Auswertung des kürzesten Abstands zwischen dem anderen Kraftfahrzeug und der Trajektorie des eigenen Kraftfahrzeugs, die einen Hinweis darauf gibt, wie geeignet die Auswahl des einzigen Kraftfahrzeugs ist.

Die Trajektorie kann durch Integration der Geschwindigkeit und der Gierrate über eine vorbestimmte Zeit bestimmt werden.

Das Steuerungs-System kann ferner dazu eingerichtet und bestimmt sein, einen relativen Abstand zwischen dem eigenen Kraftfahrzeug und dem einzigen Kraftfahrzeug zu erfassen. Das Steuerungs-System kann ferner dazu eingerichtet und bestimmt sein, den Abstand zwischen dem eigenen Kraftfahrzeug und dem einzigen Kraftfahrzeug entsprechend einer Verkehrssituation zu regeln.

Das Steuerungs-System kann ferner dazu eingerichtet und bestimmt sein, den jeweiligen kürzesten Abstand der anderen Kraftfahrzeuge zu der Trajektorie des eigenen Kraftfahrzeugs mit dem kürzesten Abstand des einzigen Kraftfahrzeugs zu der Trajektorie des eigenen Kraftfahrzeugs zu vergleichen. Das Steuerungs-System kann ferner dazu eingerichtet und bestimmt sein, wenn das Vergleichen ergibt, dass sich ein anderes Kraftfahrzeug näher an der Trajektorie befindet, dieses auszuwählen, um diesem zu folgen und das vorher ausgewählte einzige Kraftfahrzeug für eine mögliche spätere Auswahl zu speichern.

Eine mögliche spätere Auswahl ermöglicht eine mögliche falsche Auswahl später schneller zu beheben. Dieses Speichern ermöglicht es einem Nutzer oder dem System dem Kraftfahrzeug bei einer späteren Auswahl als geeignet zu markieren oder diesem zu folgen.

Das Steuerungs-System kann ferner dazu eingerichtet und bestimmt sein, eine manuelle Eingabe eines Nutzers zu verarbeiten, wobei das einzige Kraftfahrzeug durch die Auswahl eines der anderen Kraftfahrzeuge abgewählt wird, um diesem zu folgen.

Das Abwählen hilft dem Fahrer bei einer falschen Auswahl des Systems selber Abhilfe zu verschaffen oder eine andere gewünschte Fahrroute, dem andere Kraftfahrzeug folgend, auszuwählen, die ursprünglich nicht für die Fahrt vorgesehen war.

Das Steuerungs-System kann so ausgebildet sein kann, dass das Steuerungs-System entscheiden kann, ob die manuelle Eingabe des Nutzers zulässig ist.

Ein weiterer Aspekt betrifft ein Steuerungs-Verfahren, das in einem Kraftfahrzeug basierend auf aus mindestens einem dem Kraftfahrzeug zugeordneten Umfeldsensor gewonnenen Umfelddaten vorausfahrende Kraftfahrzeuge erkennt. Das Verfahren weist die folgenden Schritte auf:
- einer elektronischen Steuerung in dem eigenen Kraftfahrzeug mittels der Umfeldsensoren den Bereich vor dem Kraftfahrzeug wiedergebende Umfelddaten bereitzustellen,
- ein am Verkehr teilnehmendes anderes Kraftfahrzeug mit dem mindestens einen Umfeldsensor zu erfassen,
- Positionen des anderen Kraftfahrzeugs für ein vorbestimmtes Zeitintervall zu ermitteln,
- am Ende des Zeitintervalls zu bestimmen, ob
   a) eine aktuelle Position des eigenen Kraftfahrzeugs vor wenigstens einer der ermittelten Positionen des anderen Kraftfahrzeugs liegt;
   b) ein lateraler Abstand zwischen einer jeweils nächsten Position der ermittelten Positionen des anderen Kraftfahrzeugs vor und hinter der aktuellen Position des eigenen Kraftfahrzeugs einen vorbestimmten Wert nicht überschreitet; und
   c) eine Anzahl der ermittelten Positionen des anderen Kraftfahrzeugs, die sich vor der aktuellen Position des eigenen Kraftfahrzeugs befinden, eine vorbestimmte Mindestanzahl überschreitet;
- wenn bestimmt wurde, dass a), b) und c) erfüllt sind, aus den ermittelten Positionen des anderen Kraftfahrzeugs eine Trajektorie zu estimieren, und
- das andere Kraftfahrzeug auszuwählen, um diesem zu folgen, basierend auf einem Abweichungsmaß zwischen der estimierten Trajektorie des anderen Kraftfahrzeugs und einer Trajektorie des eigenen Kraftfahrzeugs.

Auch wenn einige der voranstehend beschriebenen Aspekte in Bezug auf das Steuerungs-System beschrieben wurden, so können diese Aspekte auch auf das Steuerungs-Verfahren zutreffen. Genauso können die voranstehend in Bezug auf das Steuerungs-Verfahren beschriebenen Aspekte in entsprechender Weise auf das Steuerungs-System zutreffen.

### Kurbeschreibung der Zeichnungen

Die vorliegende Erfindung soll weiter anhand von Figuren erläutert werden. Diese Figuren zeigen schematisch:
- Figur 1: eine schematische Darstellung eines Flussdiagramms gemäß einem Ausführungsbeispiel der vorliegenden Erfindung;
- Figur 2: eine schematische Darstellung von Fahrbahnen mit dazugehörigen Fahrbahnbegrenzungen und Fahrbahnmarkierungen;
- Figur 3: eine schematische Darstellung einer Fahrsituation zur Auswahl von einer Fahrbahn mit entsprechenden Fahrbahnbegrenzungen und Fahrbahnmarkierungen;
- Figur 4: eine schematische Darstellung eines Flussdiagramms gemäß einem Ausführungsbeispiel der vorliegenden Erfindung;
- Figur 5: eine schematische Darstellung einer Fahrsituation mit einem eigenen Kraftfahrzeug und einem anderen Kraftfahrzeug mit Stützstellen und einer estimierten Trajektorie des anderen Kraftfahrzeugs;
- Figur 6: eine schematische Darstellung einer Abweichung zwischen der einer Trajektorie des eigenen Kraftfahrzeugs und der Trajektorie des anderen Kraftfahrzeugs;
- Figur 7: eine schematische Darstellung eines aktuellen Abstands zwischen einer Position des eigenen Kraftfahrzeugs zu der Position des anderen Kraftfahrzeugs;
- Figur 8: eine schematische Darstellung eines Fehlers der estimierten Trajektorie des anderen Kraftfahrzeuges;
- Figur 9: eine schematische Darstellung einer Krümmung der estimierten Trajektorie des anderen Kraftfahrzeuges anhand eines Krümmungskreises;
- Figur 10: eine schematische Darstellung einer relativen Geschwindigkeit zwischen dem eigenen und dem anderen Kraftfahrzeug; und
- Figur 11: eine schematische Darstellung eines Flussdiagramms gemäß einem Ausführungsbeispiel der vorliegenden Erfindung.

Die hier beschriebenen Verfahrensvarianten der sowie deren Funktions- und Betriebsaspekte dienen lediglich dem besseren Verständnis ihrer Struktur, Funktionsweise und Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst und können zu Gegenstad weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

### Detaillierte Beschreibung der Zeichnungen

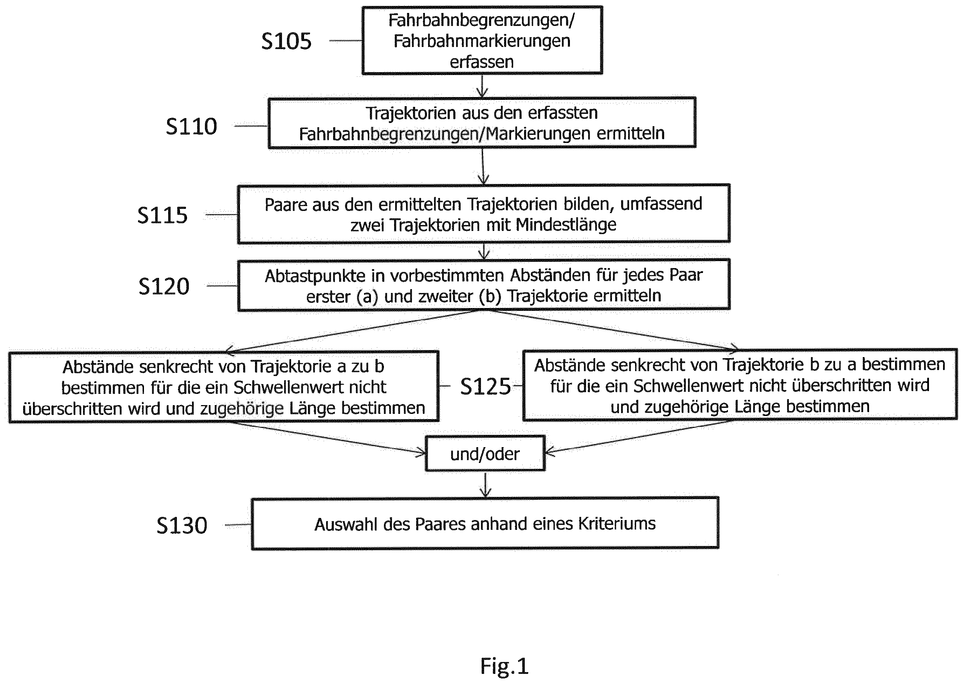

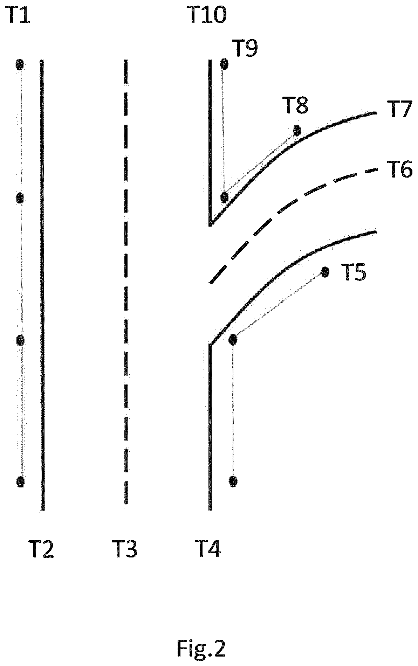

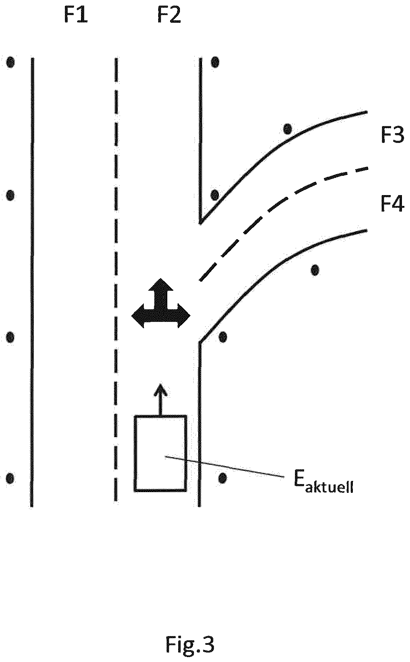

Figur 1 zeigt eine schematische Darstellung eines Flussdiagramms gemäß einem Ausführungsbeispiel der vorliegenden Erfindung. Zuerst werden durch das System über die Umfeldsensoren Umfelddaten erfasst S105. Die Umfelddaten umfassen Fahrbahnbegrenzungen und Fahrbahnmarkierungen. Die Fahrbahnbegrenzungen und Fahrbahnmarkierungen werden dann herangezogen, um daraus Trajektorien zu ermitteln S110. Die Fahrbahnbegrenzungen und Fahrbahnmarkierungen liefern Informationen wie Linienstrukturen und Pfadinformationen mit sich, welche für die Trajektorienbildung verwendet werden. Hierzu dienen nicht nur weiße Straßenmarkierungen, sondern auch Abstandpfosten an Straßenrändern. Aus den Trajektorien werden nun Paare gebildet S115. Hierbei müssen die Trajektorien eine Mindestlänge aufweisen. Weist eine Trajektorie diese Mindestlänge nicht auf, zum Beispiel wenn es nur wenige Abstandpfosten oder zu kurze Linienmarkierungen gibt, wird diese Trajektorie für die Paarbildung nicht berücksichtigt. Für jedes Paar erster und zweiter Trajektorien werden Abtastpunkte in vorbestimmten Abständen ermittelt S120. Da das zugrundeliegende Abstandstestverfahren nicht symmetrisch ist, kann im Folgenden eines der beiden Verfahren verwendet werden oder beide um die Ergebnisse zu verbessern. Es können jeweils Abstände von der ersten zu der zweiten Trajektorie jedes Paares und/oder jeweils Abstände von der zweiten zu der ersten Trajektorie jedes Paares bestimmt werden S125. Es kann jeweils eine zugehörige Länge eines Abschnitts entlang der ersten und/oder der zweiten Trajektorie berechnet werden bei der die Abstände innerhalb eines vorbestimmten Wertebereichs liegen. Nach dem Schritt des Bestimmens wird ein Paar basierend auf einem Kriterium ausgewählt, um basierend auf diesem Paar eine Fahrbahn für das Kraftfahrzeug auszuwählen. Das Kriterium können die zwei berechneten Längen sein. Das Kriterium kann auch ein Maximum sein. Das Maximum wird in diesem Fall so ermittelt, dass die berechneten Längen der Abschnitte der ersten und zweiten Trajektorie jedes Paares die größte Länge aufweisen. Das Kriterium kann auch ein Mittelwert sein. Der Mittelwert wird dann durch zwei Längen der Abschnitte der ersten und der zweiten Trajektorie jedes Paares ermittelt. Der Mittelwert jedes Paares kann dann untereinander verglichen werden, um dann das Paar mit dem größten Mittelwert auszuwählen. Um das Verfahren zu verbildlichen wird in den Figuren 2 und 3 ein Szenario schematisch dargestellt.

Figur 2 zeigt eine schematische Darstellung von Fahrbahnen mit dazugehörigen Fahrbahnbegrenzungen und Fahrbahnmarkierungen. In Figur 2 sind Fahrbahnbegrenzungen und durchgezogenen und gestrichelten Linien gemäß einer wohlbekannten Straßensituation dargestellt. Die Fahrbahnmarkierungen und die Fahrbahnbegrenzungen liefern Informationen über mögliche Trajektorien T1 bis T10. Diese Trajektorien sind schematisch als durchgezogene oder gestrichelte Linien angedeutet. Hierbei können alle Trajektorien miteinander kombiniert werden, wobei diese Kombination eine Fahrbahn vorgeben kann. Aus dieser Kombination, hier Paar genannt, kann dann diese Fahrbahn ermittelt werden. Zum Beispiel bilden die Paare T1 und T3 die linke Fahrspur der Straßensituation ab. Für die rechte Fahrbahn ergeben sich mehrere Möglichkeiten, zum Beispiel T2 mit T4 und T10, sowie T3 mit T4 und T10. Für die Abbiegekurve würden T5 mit T8 oder T4 mit T7 in Betracht kommen. Eine Auswahlsituation, bei der eine geeignete Fahrbahn gewählt werden soll, wird in Figur 3 schematisch dargestellt.

Figur 3 zeigt eine schematische Darstellung einer Fahrsituation zur Auswahl von einer Fahrbahn mit entsprechenden Fahrbahnbegrenzungen und Fahrbahnmarkierungen. Die Fahrbahnen F1 bis F4 stehen für das in schwarz dargestellte Kraftfahrzeug E_akt zur Verfügung. Die Umfeldsensoren erfassen den Bereich in Fahrtrichtung vorwärts in einem Bereich vor dem Kraftfahrzeug. Diese Sichtrichtung der Umfeldsensoren liefert gemäß dem Ausführungsbeispiel in Figur 1 die Fahrbahnen F1 bis F4. Zur Auswahl einer geeigneten Fahrbahn wird zurückgegriffen auf Situationsbedingte Umstände, welche Anzeigen ob zum Beispiel rechts abgebogen werden soll. Wenn diese Auswahl wenig sinnvoll erscheint, werden F3 und F4 nicht in der Ermittlung einer geeigneten Fahrbahn berücksichtigt. Die Fahrbahnen F1 und F2 bilden dementsprechend konsistente Fahrbahnen und werden für die Auswahl berücksichtigt.

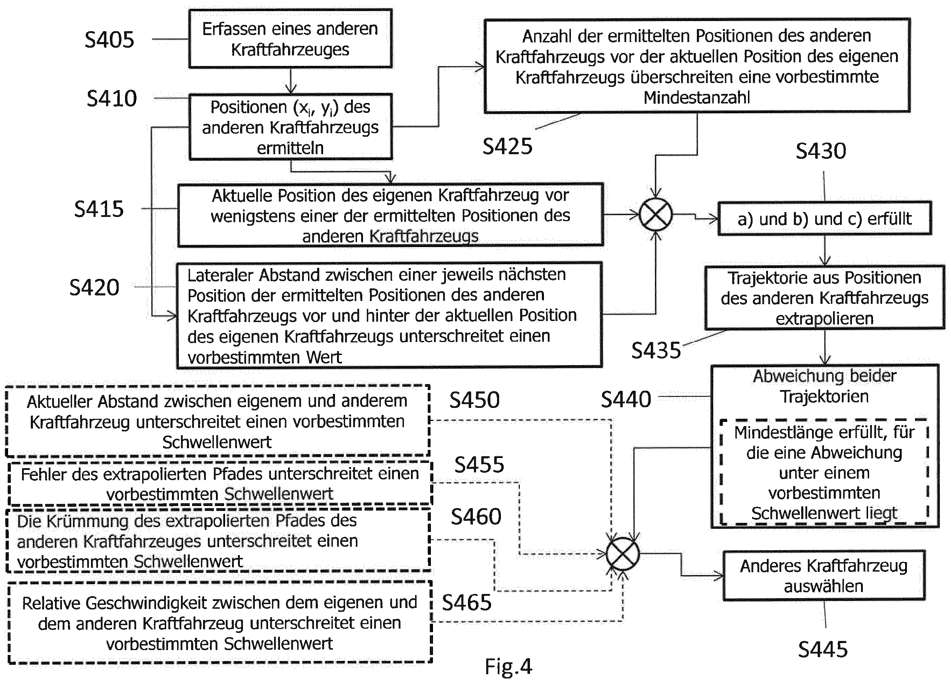

Figur 4 zeigt eine schematische Darstellung eines Flussdiagramms gemäß einem Ausführungsbeispiel der vorliegenden Erfindung. Ein am Verkehr teilnehmendes anderes Kraftfahrzeug wird mit den Umfeldsensoren erfasst S405. Daraufhin werden Positionen des anderen Kraftfahrzeugs für ein vorbestimmtes Zeitintervall ermittelt S410. Am Ende des Zeitintervalls wird bestimmt, ob eine aktuelle Position des eigenen Kraftfahrzeugs vor wenigstens einer der ermittelten Positionen des anderen Kraftfahrzeugs liegt S415. Ferner wird bestimmt, ob ein lateraler Abstand zwischen einer jeweils nächsten Position der ermittelten Positionen des anderen Kraftfahrzeugs vor und hinter der aktuellen Position des eigenen Kraftfahrzeugs einen vorbestimmten Wert nicht überschreitet S420. Ferner wird bestimmt, ob eine Anzahl der ermittelten Positionen des anderen Kraftfahrzeugs, die sich vor der aktuellen Position des eigenen Kraftfahrzeugs befinden, eine vorbestimmte Mindestanzahl überschreitet S425. Wenn diese Bedingungen erfüllt sind S430, wird aus den ermittelten Positionen des anderen Kraftfahrzeugs eine Trajektorie estimiert S435. Daraufhin wird das andere Kraftfahrzeug ausgewählt und diesem gefolgt S445. Die Auswahl basiert auf einer Abweichung S440 zwischen der estimierten Trajektorie und einer Trajektorie des eigenen Kraftfahrzeugs. Die aktuelle Position kann eine Position sein zu einem Zeitpunkt nach oder am Ende des vorbestimmten Zeitintervalls. Der laterale Abstand kann als Abstand senkrecht zu einer Verlaufsrichtung einer Fahrbahn verstanden werden. Ein lateraler Abstand zwischen zwei Punkten kann somit ein Abstand zwischen den beiden Punkten senkrecht zu einer Fahrbahnverlaufsrichtung sein, bzw. zu der Fahrrichtung des eigenen Kraftfahrzeugs. Die Abweichung zwischen der estimierten Trajektorie und der Trajektorie des eigenen Kraftfahrzeugs kann einen vorbestimmten Schwellenwert unterschreiten. Der vorbestimmte Schwellenwert kann durch einen Abstand, einer Krümmung und/oder einen Verlauf vorbestimmt sein. Der vorbestimmte Schwellenwert kann durch einen maximalen Wert für den Abstand, dem Krümmungsunterschied oder den Verlaufsunterschied festgelegt sein. Die Abweichung kann bestimmt werden durch einen lateralen Abstand zwischen den Trajektorien, ausgehend von einer der beiden Trajektorien. Die Abweichung für eine Mindestlänge der Trajektorie des eigenen Kraftfahrzeugs kann unterschritten werden.

Die Mindestlänge kann eine Länge angeben, für die die Abweichung den vorbestimmten Schwellenwert unterschreitet. Die Mindestlänge kann eine Länge oder Entfernung zwischen zwei Punkten sein, innerhalb der oder zwischen denen die Abweichung der estimierten Trajektorie zu der eigenen Trajektorie den vorbestimmten Schwellenwert unterschreitet. Die Mindestlänge kann über einem vorbestimmten Schwellenwert liegen basierend auf einem aktuellen Abstand zwischen dem eigenen und dem anderen Kraftfahrzeug. Der aktuelle Abstand zwischen dem eigenen und dem anderen Kraftfahrzeug kann kleiner als die Mindestlänge sein. Optional S450 kann die Auswahl basieren auf einem aktuellen Abstand zwischen dem eigenen und dem anderen Kraftfahrzeug, der einen vorbestimmten Schwellenwert unterschreiten soll. Optional S455 kann die Auswahl basieren auf einem Fehler der estimierten Trajektorie, der einen vorbestimmten Schwellenwert unterschreiten soll. Optional S460 kann die Auswahl basieren auf einer Krümmung der estimierten Trajektorie, die einen vorbestimmten Schwellenwert unterschreiten soll. Optional S465 kann die Auswahl auch auf einer relativen Geschwindigkeit zwischen dem anderen Kraftfahrzeug und dem eigenen Kraftfahrzeug basieren, die einen vorbestimmten Schwellenwert unterschreiten soll.

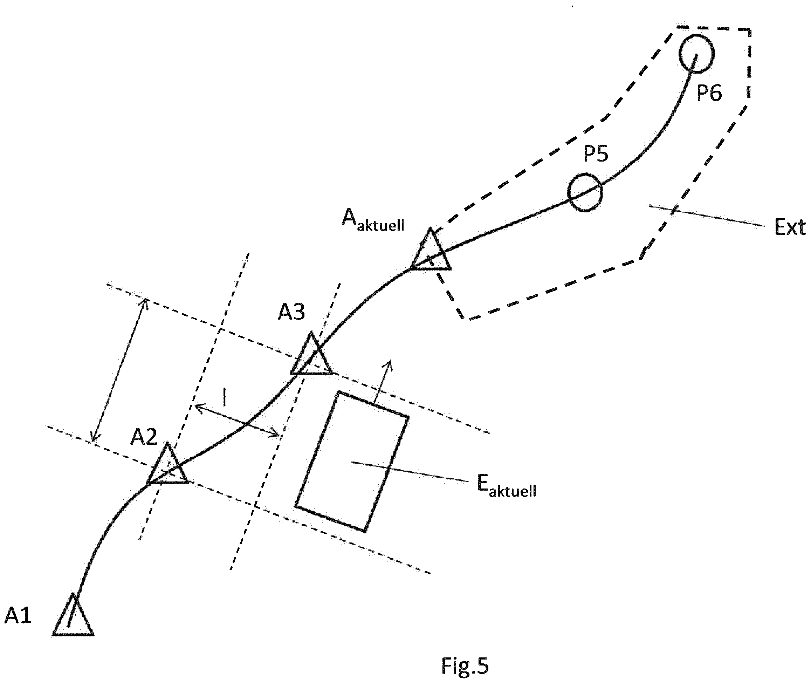

Figur 5 zeigt eine schematische Darstellung einer Fahrsituation mit einem eigenen Kraftfahrzeug und einem anderen Kraftfahrzeug mit Stützstellen und einer estimierten Trajektorie des anderen Kraftfahrzeugs. Die Dreiecke A1, A2, A3 und Aₐₖₜᵤₑₗₗ stellen Positionen eines anderen Kraftfahrzeugs dar. Eₐₖₜᵤₑₗₗ und Aₐₖₜᵤₑₗₗ stellen aktuelle Positionen eines eigenen und des anderen Kraftfahrzeugs dar. Ext stellt ein Estimationsgebiet dar, in dem die Punkte P5 und P6 liegen, welche Punkte auf der Estimationskurve darstellen, die sogenannte estimierte Trajektorie. d und I stellen in diesem Zusammenhang einen Abstand zwischen zwei berechneten Positionen A2 und A3 des anderen Kraftfahrzeugs dar aus der Sicht eines Koordinatensystems des eigenen Kraftfahrzeugs. I stellt den lateralen Abstand zwischen A2 und A3 dar, der einen vorbestimmten Wert nicht überschreiten sollte. d stellt den longitudinalen Abstand zwischen A2 und A3 dar. Die Darstellung zeigt hier schematisch, dass eine aktuelle Position des eigenen Kraftfahrzeugs zwischen zwei bestimmten Positionen des anderen Kraftfahrzeugs liegen kann, die zu einem früheren Zeitpunkt bestimmt wurden.

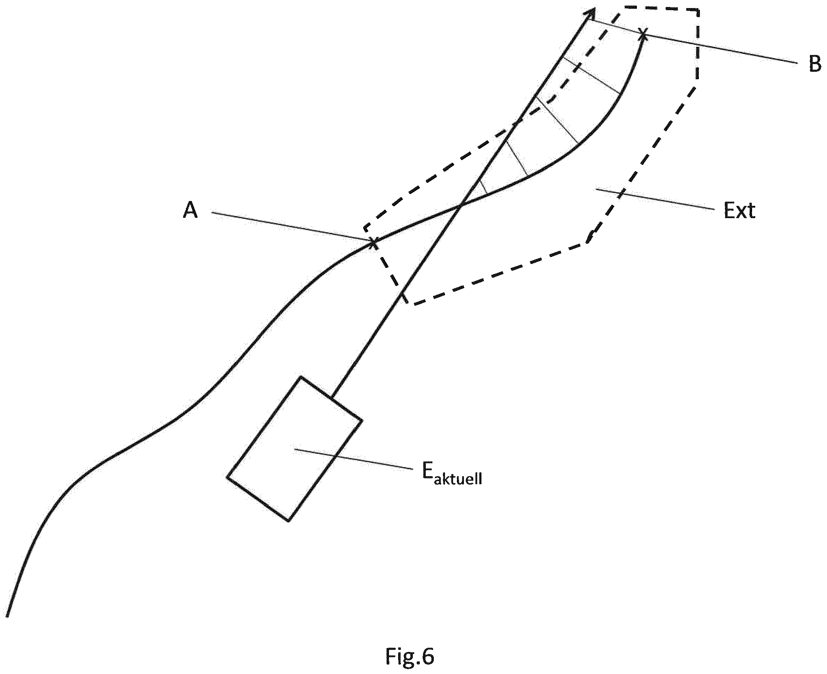

Ausgehend aus den Punkten A1 bis Aₐₖₜᵤₑₗₗ wird die estimierte Trajektorie mit den Punkten P5 und P6 berechnet. Welche Bedingung vorzugsweise erfüllt sein soll, damit das andere Kraftfahrzeug von dem eigenen Kraftfahrzeug ausgewählt wird, ist in Figur 6 gezeigt.

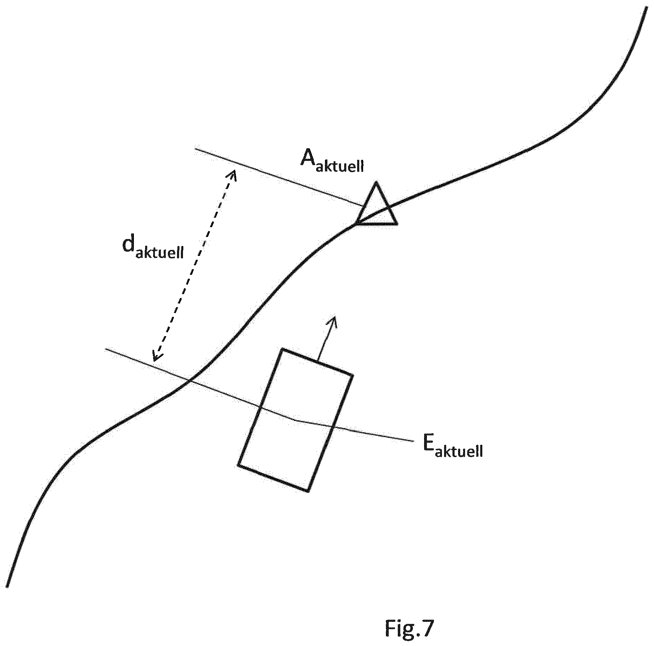

Figur 6 zeigt eine schematische Darstellung einer Abweichung zwischen der einer Trajektorie des eigenen Kraftfahrzeugs und der Trajektorie des anderen Kraftfahrzeugs. Der Punkt A und der Punkt B der estimierten Trajektorie des anderen Kraftfahrzeugs stellt eine Strecke dar, für die eine Abweichung zwischen der estimierten Trajektorie und der Trajektorie des eigenen Kraftfahrzeugs innerhalb eines vorbestimmten Schwellenwerts liegt. Hierbei könnte die Abweichung auf einer Krümmung der estimierten Kurve beruhen, angedeutet durch die größere Krümmung der estimierten Trajektorie im Gegensatz zu der estimierten Trajektorie des eigenen Kraftfahrzeugs. Hier wird der Abstand zwischen der estimierten Trajektorie und der Trajektorie des eigenen Kraftfahrzeugs durch Striche angedeutet. Dieser Abstand kann als Kriterium für die Auswahl der estimierten Trajektorie herangezogen werden. Die Länge, bis zu der die Abweichung innerhalb des vorbestimmten Schwellenwerts liegt, wird ermittelt und mit anderen Trajektorien verglichen und/oder wenn die Länge eine Mindestlänge ist, das dazugehörige andere Kraftfahrzeug ausgewählt. Ein weiteres Kriterium für die Auswahl eines anderen Kraftfahrzeugs ist in Figur 7 schematisch dargestellt.

Figur 7 zeigt eine schematische Darstellung eines aktuellen Abstands dₐₖₜᵤₑₗₗ zwischen einer Position des eigenen Kraftfahrzeugs Eₐₖₜᵤₑₗₗ zu der Position des anderen Kraftfahrzeugs Aₐₖₜᵤₑₗₗ. Es ist leicht vorzustellen, dass bei einem zu großen Abstand zwischen Eₐₖₜᵤₑₗₗ und Aₐₖₜᵤₑₗₗ das dazugehörige andere Kraftfahrzeug nicht zur Auswahl und Verfolgung geeignet ist. Erfüllt also der aktuelle Abstand dₐₖₜᵤₑₗₗ die optionale Bedingung unterhalb eines Schwellenwerts zu liegen nicht, wird das andere Kraftfahrzeug nicht für die Auswahl vorgesehen.

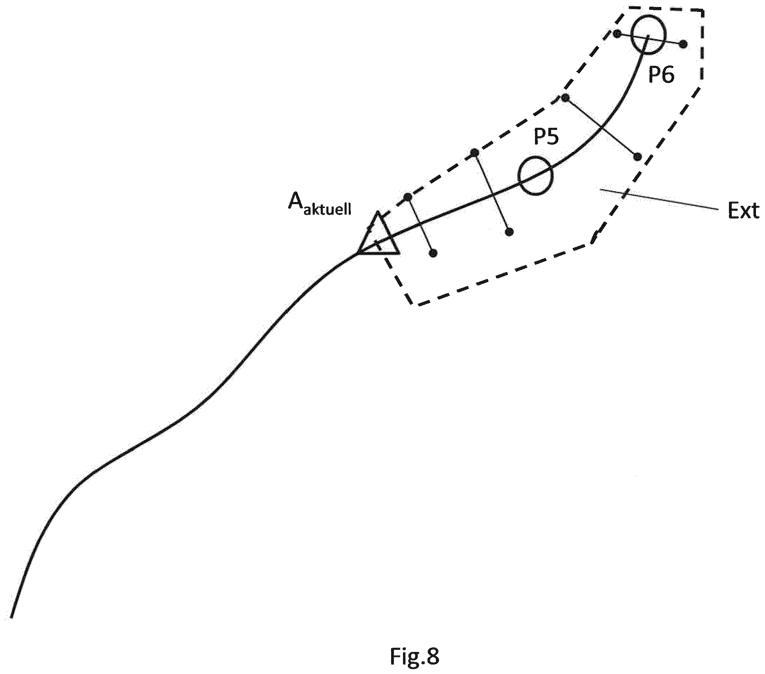

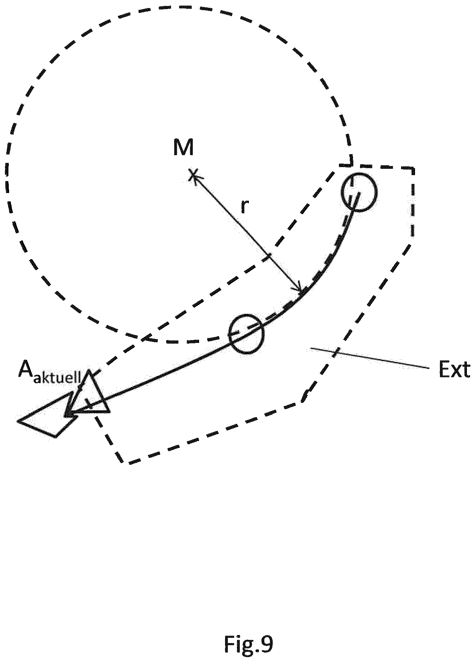

Figur 8 zeigt eine schematische Darstellung eines Fehlers der estimierten Trajektorie des anderen Kraftfahrzeuges. Die schwarzen Querstriche im Estimationsgebiet Ext stellen einen Fehler der estimierten Kurve dar. Liegt dieser Fehler innerhalb eines vorbestimmten Wertebereichs, kann die estimierte Kurve für eine Auswahl des anderen Kraftfahrzeugs berücksichtigt werden. Eine weiter optionale Bedingung für die Auswahl des anderen Kraftfahrzeugs ist in Figur 9 schematisch dargestellt.

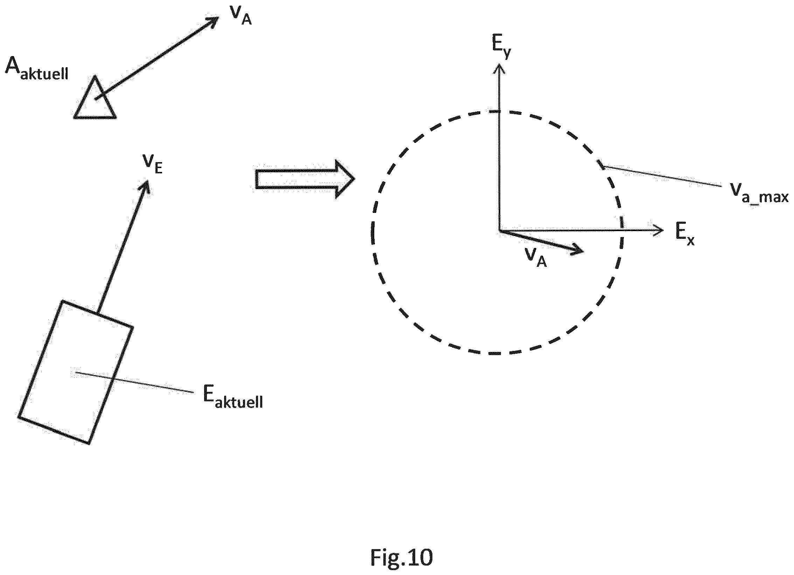

Figur 9 zeigt eine schematische Darstellung einer Krümmung der estimierten Trajektorie des anderen Kraftfahrzeuges anhand eines Krümmungskreises. Der Krümmungskreis ist hier schematisch definiert durch den Punkt M und den Radius r. Der Krümmungskreis M ist an der Stelle der größten Krümmung der estimierten Trajektorie des anderen Kraftfahrzeugs angelegt. Unterschreitet der Radius r einen vorbestimmten Wert, ist die estimierte Trajektorie ungeeignet und entsprechend die Auswahl des anderen Kraftfahrzeugs. Der kleine Krümmungsradius ist gleichbedeutend mit einer großen Krümmung der estimierten Kurve. Eine weitere optionale Bedingung für die Auswahl des anderen Kraftfahrzeugs ist in Figur 10 gegeben.

Figur 10 zeigt eine schematische Darstellung einer relativen Geschwindigkeit zwischen dem eigenen und dem anderen Kraftfahrzeug. Es ist eine aktuelle Position des eigenen Kraftfahrzeugs Eₐₖₜᵤₑₗₗ und dessen aktuelle Geschwindigkeit v_{E} schematisch dargestellt. Es ist weiter eine aktuelle Position des anderen Kraftfahrzeugs Aₐₖₜᵤₑₗₗ und dessen aktuelle Geschwindigkeit v_{A} schematisch dargestellt. Auf der rechten Seite der Figur 10 ist ein Koordinatensystem aus Sicht des eigenen Kraftfahrzeugs dargestellt. Hierin bilden E_{y} die Fahrtrichtung und Eₓ die laterale Richtung ausgehend von einem Referenzpunkt des eigenen Kraftfahrzeugs. Der Kreis v_{a_max} verdeutlicht einen maximalen Wert für die relative Geschwindigkeit des anderen Kraftfahrzeugs zu dem eigenen Kraftfahrzeug. Ist vₐ außerhalb des Kreises v_{a_max}, ist das dazugehörige andere Kraftfahrzeug für die Auswahl nicht geeignet.

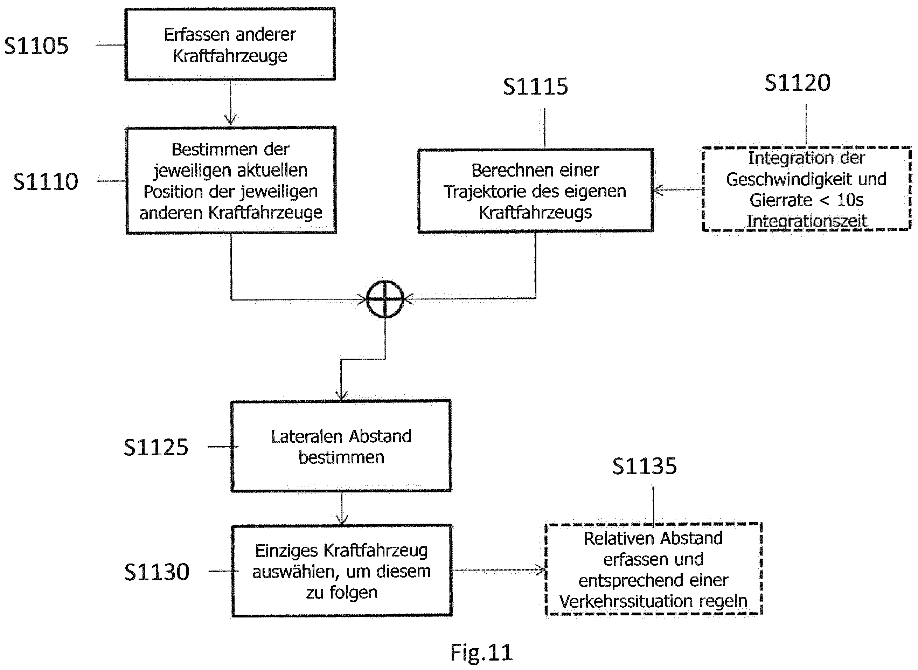

Figur 11 zeigt eine schematische Darstellung eines Flussdiagramms gemäß einem Ausführungsbeispiel der vorliegenden Erfindung. Am Verkehr teilnehmende andere Kraftfahrzeuge vor dem eigenen Kraftfahrzeug werden mit mindestens einem Umfeldsensor erfasst S1105. Eine jeweilige Position der anderen Kraftfahrzeuge wird mit dem mindestens einen Umfeldsensor bestimmt S1110. Aus einer aktuellen Geschwindigkeit und einer aktuellen Gierrate des eigenen Kraftfahrzeugs wird eine Trajektorie des eigenen Kraftfahrzeugs bestimmt S1115. Die Trajektorie kann durch Integration der Geschwindigkeit und der Gierrate über eine vorbestimmte Zeit bestimmt werden, zum Beispiel eine Zeit bis zu 10 Sekunden. Dann wird ein einziges Kraftfahrzeug aus den anderen Kraftfahrzeugen ausgewählt S1130. Die Auswahl basiert auf einem kürzesten Abstand zu der Trajektorie S1125. Dem anderen Kraftfahrzeug wird mit dem eigenen Kraftfahrzeug gefolgt. Optional S1135 kann ein relativer Abstand zwischen dem eigenen Kraftfahrzeug und dem einzigen Kraftfahrzeug erfasst werden. Dieser Abstand kann dann zwischen dem eigenen Kraftfahrzeug und dem einzigen Kraftfahrzeug entsprechend einer Verkehrssituation geregelt werden. Optional kann ein jeweiliger kürzester Abstand der anderen Kraftfahrzeuge zu der Trajektorie mit dem kürzesten Abstand des einzigen Kraftfahrzeugs verglichen werden. Wenn das Vergleichen dann ergeben hat, dass sich ein anderes Kraftfahrzeug näher an der Trajektorie befindet, wird dieses ausgewählt, um diesem zu folgen. Das einzige Kraftfahrzeug wird dann für eine mögliche spätere Auswahl gespeichert. Eine mögliche spätere Auswahl ermöglicht es eine mögliche falsche Auswahl später wieder zu beheben. Dieses Speichern ermöglicht es einem Nutzer oder dem System das einzige Kraftfahrzeug bei einer späteren Auswahl als geeignet zu markieren oder diesem zu folgen.

Zusätzlich kann eine manuelle Eingabe eines Nutzers verarbeitet werden, wobei das einzige Kraftfahrzeug durch die manuelle Auswahl eines der anderen Kraftfahrzeuge abgewählt wird, um diesem zu folgen. Das Abwählen hilft dem Fahrer bei einer falschen Auswahl des Systems selber Abhilfe zu verschaffen oder eine andere gewünschte Fahrroute, dem andere Kraftfahrzeug folgend, auszuwählen, die ursprünglich nicht für die Fahrt vorgesehen war. Auch kann das System darüber entscheiden, ob eine solche manuelle Eingabe des Nutzers zulässig ist.

## Patentansprüche

1. Steuerungs-System, das zum Einsatz in einem Kraftfahrzeug eingerichtet und bestimmt ist, basierend auf aus mindestens einem dem Kraftfahrzeug zugeordneten Umfeldsensor gewonnenen Umfelddaten vorausfahrende Kraftfahrzeuge zu erkennen, wobei der mindestens eine Umfeldsensor dazu eingerichtet ist, einer elektronischen Steuerung des Steuerungs-Systems die den Bereich vor dem Kraftfahrzeug wiedergebenden Umfelddaten bereitzustellen, und wobei das Steuerungs-System wenigstens dazu eingerichtet und bestimmt ist,
- ein am Verkehr teilnehmendes anderes Kraftfahrzeug mit dem mindestens einen Umfeldsensor zu erfassen (S405),
- Positionen des anderen Kraftfahrzeugs für ein vorbestimmtes Zeitintervall zu ermitteln (S410),
- am Ende des Zeitintervalls zu bestimmen, ob
a) eine aktuelle Position (S415) des eigenen Kraftfahrzeugs vor wenigstens einer der ermittelten Positionen des anderen Kraftfahrzeugs liegt;
b) ein lateraler Abstand (S420) zwischen einer jeweils nächsten Position der ermittelten Positionen des anderen Kraftfahrzeugs vor und hinter der aktuellen Position des eigenen Kraftfahrzeugs einen vorbestimmten Wert nicht überschreitet; und
c) eine Anzahl der ermittelten Positionen des anderen Kraftfahrzeugs (S425), die sich vor der aktuellen Position des eigenen Kraftfahrzeugs befinden, eine vorbestimmte Mindestanzahl überschreitet;
- wenn bestimmt wurde, dass a), b) und c) erfüllt sind (S430), aus den ermittelten Positionen des anderen Kraftfahrzeugs eine Trajektorie zu estimieren (S435), und
- das andere Kraftfahrzeug auszuwählen (S445), um diesem zu folgen, basierend auf einem Abweichungsmaß (S440) zwischen der estimierten Trajektorie des anderen Kraftfahrzeugs und einer Trajektorie des eigenen Kraftfahrzeugs.

2. Steuerungs-System nach Anspruch 1, wobei das Abweichungsmaß zwischen der estimierten Trajektorie und der Trajektorie des eigenen Kraftfahrzeugs einen vorbestimmten Schwellenwert unterschreitet.

3. Steuerungs-System nach Anspruch 1 oder 2, wobei das Abweichungsmaß für eine Mindestlänge der Trajektorie des eigenen Kraftfahrzeugs unterschritten wird.

4. Steuerungs-System nach Anspruch 3, wobei die Mindestlänge über einem vorbestimmten Schwellenwert liegt basierend auf einem aktuellen Abstand zwischen dem eigenen und dem anderen Kraftfahrzeug.

5. Steuerungs-System nach Anspruch 3 oder 4, wobei der aktuelle Abstand zwischen dem eigenen und dem anderen Kraftfahrzeug kleiner als die Mindestlänge ist.

6. Steuerungs-System nach einem der Ansprüche 1 bis 5, das ferner dazu eingerichtet und bestimmt ist,
- das teilnehmende andere Kraftfahrzeug ferner auszuwählen, um diesem zu folgen, wenn
a) ein aktueller Abstand (S450) zwischen dem eigenen und dem anderen Kraftfahrzeug einen vorbestimmten Schwellenwert unterschreitet;
b) der Fehler der estimierten Trajektorie (S455) einen vorbestimmten Schwellenwert unterschreitet;
c) die Krümmung der estimierten Trajektorie (S460) einen vorbestimmten Schwellenwert unterschreitet; und/oder
d) die relative Geschwindigkeit (S465) zwischen dem anderen Kraftfahrzeug und dem eigenen Kraftfahrzeug einen vorbestimmten Schwellenwert unterschreitet.

7. Steuerungs-Verfahren, das in einem Kraftfahrzeug basierend auf aus mindestens einem dem Kraftfahrzeug zugeordneten Umfeldsensor gewonnenen Umfelddaten vorausfahrende Kraftfahrzeuge zu erkennen, mit den Schritten:
- einer elektronischen Steuerung in dem eigenen Kraftfahrzeug mittels der Umfeldsensoren den Bereich vor dem Kraftfahrzeug wiedergebende Umfelddaten bereitzustellen,
- ein am Verkehr teilnehmendes anderes Kraftfahrzeug mit dem mindestens einen Umfeldsensor zu erfassen,
- Positionen des anderen Kraftfahrzeugs für ein vorbestimmtes Zeitintervall zu ermitteln,
- am Ende des Zeitintervalls zu bestimmen, ob
a) eine aktuelle Position des eigenen Kraftfahrzeugs vor wenigstens einer der ermittelten Positionen des anderen Kraftfahrzeugs liegt;
b) ein lateraler Abstand zwischen einer jeweils nächsten Position der ermittelten Positionen des anderen Kraftfahrzeugs vor und hinter der aktuellen Position des eigenen Kraftfahrzeugs einen vorbestimmten Wert nicht überschreitet; und
c) eine Anzahl der ermittelten Positionen des anderen Kraftfahrzeugs, die sich vor der aktuellen Position des eigenen Kraftfahrzeugs befinden, eine vorbestimmte Mindestanzahl überschreitet;
- wenn bestimmt wurde, dass a), b) und c) erfüllt sind, aus den ermittelten Positionen des anderen Kraftfahrzeugs eine Trajektorie zu estimieren, und
- das andere Kraftfahrzeug auszuwählen, um diesem zu folgen, basierend auf einem Abweichungsmaß zwischen der estimierten Trajektorie des anderen Kraftfahrzeugs und einer Trajektorie des eigenen Kraftfahrzeugs.

8. Steuerungs-Verfahren nach Anspruch 7, wobei das Abweichungsmaß zwischen der estimierten Trajektorie und der Trajektorie des eigenen Kraftfahrzeugs einen vorbestimmten Schwellenwert unterschreitet.

9. Steuerungs-Verfahren nach Anspruch 7 oder 8, wobei das Abweichungsmaß für eine Mindestlänge der Trajektorie des eigenen Kraftfahrzeugs unterschritten wird.

10. Steuerungs-Verfahren nach Anspruch 9, wobei die Mindestlänge über einem vorbestimmten Schwellenwert liegt basierend auf einem aktuellen Abstand zwischen dem eigenen und dem anderen Kraftfahrzeug.

11. Steuerungs-Verfahren nach Anspruch 9 oder 10, wobei der aktuelle Abstand zwischen dem eigenen und dem anderen Kraftfahrzeug kleiner als die Mindestlänge ist.

12. Steuerungs-Verfahren nach einem der Ansprüche 7 bis 11, mit dem Schritt:
- das teilnehmende andere Kraftfahrzeug ferner auszuwählen, um diesem zu folgen, wenn
a) ein aktueller Abstand zwischen dem eigenen und dem anderen Kraftfahrzeug einen vorbestimmten Schwellenwert unterschreitet;
b) der Fehler der estimierten Trajektorie des anderen Kraftfahrzeugs einen vorbestimmten Schwellenwert unterschreitet;
c) die Krümmung der estimierten Trajektorie des anderen Kraftfahrzeugs einen vorbestimmten Schwellenwert unterschreitet; und/oder
d) die relative Geschwindigkeit zwischen dem anderen Kraftfahrzeug und dem eigenen Kraftfahrzeug einen vorbestimmten Schwellenwert unterschreitet.

## Claims

1. Control system adapted and determined for use in a motor vehicle to identify motor vehicles driving in front based on environmental data obtained by at least one environmental sensor associated with the motor vehicle, wherein the at least one environmental sensor is adapted to provide the environmental data, which represents the area in front of the motor vehicle, to an electronic control of the control system, and wherein the control system is at least adapted and determined to
- capture another motor vehicle participating in the traffic with the at least one environmental sensor (S405),
- determine positions of the other motor vehicle for a predetermined time interval (S410),
- determine at the end of the time interval whether
a) a current position (S415) of the own motor vehicle lies ahead of at least one of the determined positions of the other motor vehicle;
b) a lateral distance (S420) to a respectively next position of the determined positions of the other motor vehicle ahead of and behind the current position of the own motor vehicle does not exceed a predetermined value; and
c) a number of the determined positions of the other motor vehicle (S425), which are located ahead of the current position of the own motor vehicle, exceeds a predetermined minimum number;
- if it was determined that a), b) and c) have been fulfilled (S430), estimating a trajectory from the determined positions of the other motor vehicle (S435), and
- selecting the other motor vehicle (S445) in order to follow this based on a deviation measurement (S440) between the estimated trajectory of the other motor vehicle and a trajectory of the own motor vehicle.

2. Control system according to claim 1, wherein the deviation measurement between the estimated trajectory and the trajectory of the own motor vehicle is below a predetermined threshold value.

3. Control system according to claim 1 or 2, wherein the deviation measurement for a minimum length of the trajectory of the own motor vehicle is fallen below.

4. Control system according to claim 3, wherein the minimum length lies above a predetermined threshold value based on a current distance between the own and the other motor vehicle.

5. Control system according to claim 3 or 4, wherein the current distance between the own and the other motor vehicle is smaller than the minimum length.

6. Control system according to one of claims 1 to 5, which is further adapted and determined
- to further select the participating other motor vehicle, in order to follow this, if
a) a current distance (S450) between the own and the other motor vehicle is below a predetermined threshold value;
b) the error in the estimated trajectory (S455) is below a predetermined threshold value;
c) the curvature of the estimated trajectory (S460) is below a predetermined threshold; and/or
d) the relative speed (S465) between the other motor vehicle and the own motor vehicle is below a predetermined threshold value.

7. Control method, which in a motor vehicle identifies motor vehicles driving in front based on environmental data obtained by at least one environmental sensor associated with the motor vehicle, with the steps:
- providing an electronic control in the own vehicle by means of the environmental sensors with environmental data reproducing the area in front of the motor vehicle,
- detecting another motor vehicle participating in the traffic with the at least one environmental sensor,
- determining positions of the other motor vehicle for a predetermined time interval,
- determining at the end of the time interval whether
a) a current position of the own motor vehicle lies ahead of at least one of the determined positions of the other motor vehicle;
b) a lateral distance to a respectively next position of the determined positions of the other motor vehicle ahead of and behind the current position of the own motor vehicle does not exceed a predetermined value; and
c) a number of the determined positions of the other motor vehicle, which are located ahead of the current position of the own motor vehicle, exceeds a predetermined minimum number;
- if it was determined that a), b) and c) have been fulfilled, estimating a trajectory from the determined positions of the other motor vehicle, and
- selecting the other motor vehicle in order to follow this based on a deviation measurement between the estimated trajectory of the other motor vehicle and a trajectory of the own motor vehicle.

8. Control method according to claim 7, wherein the deviation measurement between the estimated trajectory and the trajectory of the own motor vehicle is below a predetermined threshold value.

9. Control method according to claim 7 or 8, wherein the deviation measurement for a minimum length of the trajectory of the own motor vehicle is fallen below.

10. Control method according to claim 9, wherein the minimum length lies above a predetermined threshold value based on a current distance between the own and the other motor vehicle.

11. Control method according to claim 9 or 10, wherein the current distance between the own and the other motor vehicle is smaller than the minimum length.

12. Control method according to one of claims 7 to 11, with the step:
- to further select the participating other motor vehicle, in order to follow this, if
a) a current distance between the own and the other motor vehicle is below a predetermined threshold value;
b) the error in the estimated trajectory of the other motor vehicle is below a predetermined threshold value;
c) the curvature of the estimated trajectory of the other motor vehicle is below a predetermined threshold; and/or
d) the relative speed between the other motor vehicle and the own motor vehicle is below a predetermined threshold value.

## Revendications

1. Système de commande conçu pour être utilisé dans un véhicule automobile et servant à détecter les véhicules qui précèdent, à partir des données d'environnement acquises à l'aide d'au moins un capteur d'environnement associé audit véhicule, ledit au moins un capteur d'environnement étant apte à fournir à une commande électronique du système de commande les données d'environnement reproduisant la zone située devant le véhicule, et le système de commande étant pour le moins conçu
- pour détecter (S405) à l'aide dudit au moins un capteur d'environnement un autre véhicule en circulation,
- pour déterminer (S410) pour un intervalle de temps prédéfini des positions dudit autre véhicule,
- pour déterminer à la fin de l'intervalle de temps prédéfini
a) si une position actuelle (S415) du véhicule équipé dudit système se situe devant au moins une des positions déterminées pour l'autre véhicule,
b) si devant et derrière la position actuelle du véhicule équipé dudit système, une distance latérale (S420) entre ledit véhicule et une position respectivement la plus proche des positions déterminées pour l'autre véhicule n'excède pas une valeur prédéfinie, et
c) si un nombre des positions qui ont été déterminées pour l'autre véhicule (S425) et qui se trouvent devant la position actuelle du véhicule équipé dudit système excède un nombre minimum prédéfini,
- s'il a été déterminé que les conditions a), b) et c) sont remplies (S430), estimer (S435) une trajectoire à partir des positions déterminées pour l'autre véhicule et
- sélectionner (S445) l'autre véhicule afin de le suivre, à partir d'un écart de mesure (S440) entre la trajectoire estimée de l'autre véhicule et une trajectoire du véhicule équipé dudit système.

2. Système de commande selon la revendication 1, l'écart de mesure entre la trajectoire estimée et la trajectoire du véhicule équipé dudit système étant inférieur à une valeur seuil prédéfinie.

3. Système de commande selon la revendication 1 ou 2, l'écart de mesure étant inférieur à ladite valeur seuil pour une longueur minimum de la trajectoire du véhicule équipé dudit système.

4. Système de commande selon la revendication 3, la longueur minimum étant supérieure à une valeur seuil prédéfinie, sur la base d'une distance actuelle entre le véhicule équipé dudit système et l'autre véhicule.

5. Système de commande selon la revendication 3 ou 4, la distance actuelle entre le véhicule équipé dudit système et l'autre véhicule étant inférieure à la longueur minimum.

6. Système de commande selon l'une des revendications 1 à 5, lequel est en outre conçu pour
- sélectionner l'autre véhicule en circulation afin de le suivre lorsque
a) une distance actuelle (S450) entre le véhicule équipé dudit système et l'autre véhicule est inférieure à une valeur seuil prédéfinie,
b) l'erreur pour la trajectoire estimée (S455) est inférieure à une valeur seuil prédéfinie,
c) la courbure de la trajectoire estimée (S460) est inférieure à une valeur seuil prédéfinie, et/ou
d) la vitesse relative (S465) entre l'autre véhicule et le véhicule équipé dudit système est inférieure à une valeur seuil prédéfinie.

7. Procédé de commande pour détecter, sur la base des données d'environnement acquises à l'aide d'au moins un capteur d'environnement associé au véhicule, les véhicules précédents, comprenant les étapes suivantes :
- fournir à une commande électronique dudit système de commande les données d'environnement reproduisant la zone située devant le véhicule,
- détecter (S405) à l'aide dudit au moins un capteur d'environnement un autre véhicule en circulation,
- déterminer (S410) pour un intervalle de temps prédéfini des positions dudit autre véhicule,
- déterminer à la fin de l'intervalle de temps prédéfini
a) si une position actuelle (S415) du véhicule équipé dudit système se situe devant au moins une des positions déterminées pour l'autre véhicule,
b) si devant et derrière la position actuelle du véhicule équipé dudit système, une distance latérale (S420) entre ledit véhicule et une position respectivement la plus proche des positions déterminées pour l'autre véhicule n'excède pas une valeur prédéfinie, et
c) si un nombre des positions qui ont été déterminées pour l'autre véhicule (S425) et qui se trouvent devant la position actuelle du véhicule équipé dudit système excède un nombre minimum prédéfini,
- s'il a été déterminé que les conditions a), b) et c) sont remplies (S430), estimer (S435) une trajectoire à partir des positions déterminées pour l'autre véhicule et
- sélectionner (S445) l'autre véhicule afin de le suivre, à partir d'un écart de mesure (S440) entre la trajectoire estimée de l'autre véhicule et une trajectoire du véhicule équipé dudit système.

8. Procédé de commande selon la revendication 7, l'écart de mesure entre la trajectoire estimée et la trajectoire du véhicule équipé dudit système étant inférieur à une valeur seuil prédéfinie.

9. Procédé de commande selon la revendication 7 ou 8, l'écart de mesure étant inférieur à ladite valeur seuil pour une longueur minimum de la trajectoire du véhicule équipé dudit système.

10. Procédé de commande selon la revendication 9, la longueur minimum étant supérieure à une valeur seuil prédéfinie, sur la base d'une distance actuelle entre le véhicule équipé dudit système et l'autre véhicule.

11. Procédé de commande selon la revendication 9 ou 10, la distance actuelle entre le véhicule équipé dudit système et l'autre véhicule étant inférieure à la longueur minimum.

12. Procédé de commande selon l'une des revendications 7 à 11, comprenant l'étape suivante :
- sélectionner l'autre véhicule en circulation afin de le suivre lorsque
a) une distance actuelle (S450) entre le véhicule équipé dudit système et l'autre véhicule est inférieure à une valeur seuil prédéfinie,
b) l'erreur pour la trajectoire estimée (S455) de l'autre véhicule est inférieure à une valeur seuil prédéfinie,
c) la courbure de la trajectoire estimée (S460) de l'autre véhicule est inférieure à une valeur seuil prédéfinie, et/ou
d) la vitesse relative (S465) entre l'autre véhicule et le véhicule équipé dudit système est inférieure à une valeur seuil prédéfinie.
